# EUROPEAN PATENT SPECIFICATION

(11) **EP 4 461 134 B1**
(45) Date of publication and mention of the grant of the patent: **29.10.2025**
(21) Application number: 24172119.0
(22) Date of filing: 24.04.2024
(51) Int. Cl.: A01M 1/20, A01K 13/00, A01N 25/08

(54) **HOUSING FOR PLACING IN A NATURAL ENVIRONMENT FOR KILLING TICKS**
GEHÄUSE ZUM ANORDNEN IN EINER NATÜRLICHEN UMGEBUNG ZUM TÖTEN VON ZECKEN
LOGEMENT DESTINÉ À ÊTRE PLACÉ DANS UN ENVIRONNEMENT NATUREL POUR TUER LES TIQUES

(30) Priority: 25.04.2023 NL 2034685
(43) Date of publication of application: 13.11.2024
(73) Proprietor: Ixoguard B.V., 4818 HD Breda (NL)
(72) Inventor: VAN DALSUM, Robert, BREDA (NL); VAN ROEKEL, Simon Rafaël, BREDA (NL)
(74) Representative: Algemeen Octrooi- en Merkenbureau B.V.

(56) References cited:
- EP-A1- 3 366 139
- CN-A- 113 491 264
- US-A1- 2022 201 976
- US-B1- 11 213 025
- DUVAL JEAN: "Home production of pyrethrum", 6 December 1998 (1998-12-06), XP093203849, Retrieved from the Internet <URL:https://eap.mcgill.ca/agrobio/ab360-02e.htm> [retrieved on 20240911]

## Description

The present application relates to a housing for being placed in a natural environment in order to kill ticks. The present invention also relates to a method for producing a housing and to the use of such a housing.

The Dutch National Institute for Public Health and the Environment (*Rijksinstituut voor Volksgezondheid en Milieu,* RIVM) estimates that annually 1.5 million people are bitten by ticks in the Netherlands. The number of tick bites increased by approximately 30% over a 10-year period. In 1996, 2007 and 2017, the RIVM investigated how often Dutch people were bitten by ticks each year. In 2017, the number of tick bites rose to 1.5 million per year. In 2007 and 1996, this was 1.1 million and 600,000 tick bites, respectively. The number of people who have discovered a tick themselves has also grown. About 15% of Dutch people have been bitten by a tick over the last 5 years, whilst this was only 6% in 1996.

Research by Wageningen University indicates that 1 in 3 tick bites occur in the garden. This means that annually around 500,000 tick bites occur in the garden. Approximately 27,000 cases of Lyme disease were recorded nationwide in 2020. Although infection rates differ from area to area, the RIVM and Tekenradar estimates that in the Netherlands on average around 20% of the ticks are carriers of the bacteria that can cause Lyme disease. The RIVM estimates the risk of contracting Lyme disease after a tick bite is 2-3%. That means that every year around 30,000 to 45,000 people contract Lyme disease. Annually, a third of them - thus between 10,000 and 15,000 people - become seriously ill with Lyme disease because they are bitten by a tick in their own garden. An additional problem is that the number of tick bites and the number of diagnoses of Lyme disease is increasing. In addition, the number of kinds of diseases that are spread by ticks is also increasing. Since 2016, cases of the potentially deadly tick-borne encephalitis have also been reported in the Netherlands. Tick-related problems, and specifically the danger of ticks in the garden, also occur in large parts of Europe. Annually around 200,000 cases of Lyme disease are reported in Germany. In 2020, 700 cases of tick-borne encephalitis were additionally reported there.

Ticks act as vectors and reservoirs of various pathogens, including the Borrelia burgdorferi bacterium which causes Lyme disease. Ticks are ectoparasites which develop by feeding off the blood of hosts. The predominant hosts are small rodents. In Northern and Central Europe, tick activity begins in March/April when the ground temperature increases to 5-7°C and ends in October/November as temperatures drop. There is an increased risk of infection for people who stay in areas where ticks appear (foresters, loggers, campers and hikers in nature reserves) in the active transmission season (March-November). In addition, research by Wageningen University shows that around 30% of the tick bites in the Netherlands are incurred in the garden.

Recommendations for the general public to avoid tick bites in endemic areas during the 'tick season' are, for example, avoiding contact with tall grass or low scrub, wearing clothing that covers the skin (long trousers, trouser legs in socks, solid shoes) and coating exposed skin with insect repellent products containing DEET; it should be noted that agents containing DEET can be harmful to the nervous system.

A housing for enclosing treated material impregnated with a pesticide and adapted for access by mice or other rodents is known from American patent US 11 213 025, wherein the housing is a shell in the form of a ball, wherein the shell forms an enclosure which contains fibrous material, formed into small balls, as the treated material therein. The pesticide may comprise one or more of an ectoparasiticide, insecticide, insect repellent and a pyrethrin.

Chinese publication CN 113 491 264 relates to an insect-repelling housing for small mammals, consisting of a shell provided with at least one opening where small mammals are able to go in and out, and in which a receiving cavity is formed within the shell, which cavity is provided with a nesting material comprising insecticide, in particular a chemical insecticide, namely a pyrethroid insecticide or other chemical insecticides such as chlorpyrifos, and a food bait, namely peanuts or peanut oil.

European application EP 3 366 139 relates to a pet product, a filling material being enclosed in the outer shell. The filling material comprises a pet-related infusion composition in a zeolite molecular sieve, wherein the zeolite molecular sieve ensures the infusion composition is released in said outer shell. The infusion composition comprises an active ingredient and a carrier oil selected from the group consisting of coconut oil, sweet almond oil and jojoba oil, wherein the active ingredient comprises a member selected from the group consisting of an animal lure, a sedative, an insect repellent, an insecticide, a painkiller, an odour control agent, a fungicide and an animal repellent.

US 4,662,104 discloses a method for administering insecticide to ectoparasites of rodents, comprising the following steps, namely impregnating rodent nesting material with an insecticide, namely the chemical synthesized substance permethrin, placing the nesting material in a number of holders, sorting the holders in a series in a desired area, configuring the series based on knowledge of the foraging patterns of the rodents, and ensuring that the rodents incorporate the nesting material into their nest.

US 2022/201976 discloses a housing for controlling ticks, wherein the carrier material is impregnated with an acaricide and an oral deterrent, wherein the acaricide is permethrin and the oral deterrent is a denatonium compound, for example denatonium benzoate, denatonium saccharide or denatonium chloride. The oral deterrent, which has a bitter taste, serves notably to prevent children from keeping the carrier material in their mouth or even trying to eat it.

Existing tick control methods are chemical in nature and can be harmful to the environment and other useful organisms. An additional problem with the existing tick control methods is that they are not permitted under the BPR (Biocidal Products Regulation (EU) 528/2012) in the Netherlands and other Member States of the European Union. The aforementioned biocide regulation (BPR) regulates the sale and use of any kind of biocide used to protect people, animals, materials or articles against harmful organisms such as pests or bacteria, through the effect of the active substances in the biocide. A number of products that are approved outside the EU for controlling ticks are based on the active substance permethrin. However, in the European Union permethrin is not permitted for controlling ticks (product type 18) under the BPR. In addition, this active substance is regarded as what is referred to as a candidate for substitution. That means that this active substance should only be used if there is no less-harmful alternative available. Since no biocidal products for controlling ticks are approved under the BPR, there is a need for an environmentally friendly and sustainable agent for controlling ticks in gardens. In this respect, it is important to take account of the fact that the EU Commission in its decision of 29 April 2016 (COMMISSION IMPLEMENTING DECISION (EU) 2016/678) determined that unprocessed dead organisms or parts thereof, such as flowers, are not considered to be substances, mixtures or products under the BPR and thus are not subject to this legislation.

The pyrethrins mentioned in US 11 213 025 are active insecticidal compounds extracted from pyrethrum. As such, the pyrethrins known from said document are compounds which have undergone one or more chemical processing steps and thus must be considered to be a worked-up extract derived from pyrethrum.

The object of the present invention is to provide a way of killing ticks which does not involve the use of synthetic chemical pesticides.

Yet a further object of the present invention is to provide a way of killing ticks which involves the use of naturally occurring substances, in particular unprocessed substances.

A further object of the present invention is to provide a way of killing ticks which involves the use of an active substance having a safety profile that is favourable for humans.

The present invention thus relates to a housing for being placed in a natural environment in order to kill ticks, wherein the housing comprises a cavity extending over the length thereof, in which cavity of the housing there are one or more carrier materials, wherein the aforementioned one or more carrier materials comprise one or more natural insecticides. According to the invention, a granular solid material obtained after crushing the flower buds of chrysanthemum (Chrysanthemum cinerariifolium) is used as natural insecticide.

The present inventors have found that one or more objectives are met using such a housing. The present inventors have in particular found that by taking advantage of the life cycle of the tick and also of the local ecosystem within the area where the tick lives, an environmentally friendly and sustainable way of killing ticks is obtained. The term "natural insecticides" should be understood to mean those which occur naturally. Such substances are not chemically synthesized by humans, namely are not obtained from other substances by means of chemical reaction steps. Such natural insecticides can be considered "non-processed or non-worked-up" substances. The use of such natural insecticides thus does not fall under the classification of biocidal products or treated articles according to European Regulation No. 528/2012 (BPR).

In this environmentally friendly and sustainable way, small rodents which are in the area where the ticks are also present play a major role. The mouse is for example a predominant host for young (larva) ticks. In addition, mice inherently have many pathogens, including the bacterium which causes Lyme disease. Ticks therefore often become infected after feeding on mice. In the subsequent life stage, these infected ticks can be dangerous for humans and pets.

The present housing is for example placed on the ground in a garden. The mouse can enter the housing and the mouse then comes into contact with the one or more carrier materials. The mouse will for example use the one or more carrier materials for nest building. Since the one or more carrier materials comprise one or more natural insecticides, the natural insecticides will subsequently come into contact with the fur of the mouse. Ticks which try to feed on the mouse, or which are already attached to the mouse, will die as a result of the contact with the natural insecticides. In this way, the life cycle of the tick is systemically interrupted.

According to one example, the one or more natural insecticides are selected from the group of chrysanthemum (Chrysanthemum cinerariifolium), Azadirachta indica, lavender (Lavandula angustifolia), garlic (Allium sativum), milk thistle (Silybum marianum), tobacco (Nicotiana tabacum), marigold (Tagetes spp.), eucalyptus (Eucalyptus spp.) and tansy (Tanacetum vulgare). The one or more natural insecticides to be used in the present invention can be considered unprocessed substances, which means that no chemical processing steps, such as extraction with solvents, are carried out to obtain the natural insecticides. The one or more natural insecticides to be used in the present invention can therefore be understood as pesticides which have not undergone any chemical treatment, or are of chemical origin, namely substances which are synthesized by means of one or more chemical processes.

According to the invention, the natural insecticide used is chrysanthemum (Chrysanthemum cinerariifolium), in particular the flower buds thereof. Such a natural insecticide can be considered a particularly effective substance against ticks.

With regard to safety, it should be noted that, owing to the shape and dimensions of the flower buds of chrysanthemum (Chrysanthemum cinerariifolium), there is a low health risk for humans with regard to inhalation and skin irritation, which differs significantly from that of pyrethrum, pyrethrins and pyrethroids.

According to one example, the housing is produced from a biodegradable material, selected from the group of cellulose-containing materials, such as paper, wood and cardboard, crops, such as maize and sugar cane, and biodegradable polymers, in particular polylactic acid (PLA), or a combination thereof. The use of a housing produced from a biodegradable material has the advantage that the housing will break down naturally over time. If, for example, the housing is placed in a garden, the microorganisms that are naturally present in the garden will break down the housing according to a natural process, wherein inter alia the weather conditions, such as moisture and temperature, will have an influence. Over time, there is therefore no longer a housing in the place where the housing was originally deposited.

According to one example, the one or more carrier materials are selected from the group of natural fibres comprising cotton, hemp, wool, silk, linen, sisal and jute, or a combination thereof. The use of such carrier materials, in particular in combination with natural insecticide and a housing produced from a biodegradable material, ensures that a product composed completely of components that occur naturally is obtained.

According to one example, the one or more natural insecticides are uniformly distributed over the one or more carrier materials. The even distribution is desirable since in this way the contact between the rodent and the carrier material will have the result that the rodent will always come into contact with the one or more natural insecticides. The term "uniformly" should be understood to mean that accumulation or concentration of the one or more natural insecticides in a specific part of the carrier material is minimized. The heterogeneity of the product makes it possible for mice to choose untreated parts of the cotton in order to carry the product back to the nest in their mouth, which helps to avoid the sensory repulsion that some mice appear to experience upon direct mouth contact with nesting material treated commercially with insecticides.

According to one example, the housing is provided with one or more openings, as a result of which a rodent, in particular a mouse, can move in and out of the housing. Such openings make it possible for the rodent to be able to move freely through the housing in order to thus establish the contact between the rodent and the carrier material.

According to one example, the housing for killing ticks is placed in a natural environment in which there are ticks, for example a garden, a park, a recreation area and a golf course.

According to one example, the housing is produced from cardboard, wherein crushed flower buds of chrysanthemum (Chrysanthemum cinerariifolium) mixed with cotton are located in the cavity of the housing. Such a combination of naturally occurring components results in a housing which can be used to kill ticks in an environmentally friendly and sustainable way.

According to one example, the housing has a length in the region of at least 5 cm, preferably at least 10 and at most 25 cm, preferably at most 20 cm, and a cross section in the region of at least 2 cm, preferably at least 3 cm and at most 8 cm, preferably at most 5 cm. The external shape of the housing is not limited to the shape of a square tube, but can also have the shape of a cylinder, bar or round tube. A housing according to the present invention has, for example, a length of approximately 14 cm and a cross section of approximately 4 cm.

The present invention also relates to a method for producing a housing as described above, wherein the method comprises the following steps:
- providing a housing which comprises a cavity extending over the length thereof,
- providing one or more insecticides,
- bringing one or more carrier materials into contact with the one or more insecticides to obtain a filling material,
- applying the filling material in the cavity of the housing.

The present invention also relates to the use of a housing as described above in a natural environment in order to kill ticks.

Also disclosed, but not claimed, is a method for obtaining a natural insecticide, comprising the following steps:
- providing a natural source, in particular plants of the species Chrysanthemum cinerariifolium,
- drying the natural source,
- grinding the natural source to obtain a granular solid material comprising the natural insecticide.

The present inventors have determined that, if the flowers are crushed, the ingredients in the seed pods are exposed to light, leading to rapid photodegradation, producing a complex mixture of compounds which is inactive. By contrast, according to the present method, the compounds will be much more stable within the whole flower, even if the flowers are dried in sunlight, as a result of which the active compounds will be stable for years in the dark at ambient temperature.

The present inventors have also observed that there is more prolonged exposure to the active substance and that a better control over the intensity of the exposure is possible. The active components of the flowers are released subtly when mice disturb or move the active substance in the nest. This results in prolonged exposure to the active substance. The intensity of the exposure can be regulated by the amount of flowers used in the carrier material, in particular cotton, and by the way in which the cotton is processed or woven in order to incorporate the flower parts therein.

One example of a housing according to the present invention will be discussed in more detail below, which example serves merely for illustration. The housing to be described below is a housing produced from biodegradable cardboard, wherein crushed flower buds of chrysanthemum (Chrysanthemum cinerariifolium) mixed with cotton are located in the cavity of the housing.

The plants of the species Chrysanthemum cinerariifolium are primarily cultivated in areas with a suitable climate, such as East Africa, Australia, South America and parts of Europe. The plants are usually cultivated in the spring and the beginning of summer, when the temperature and the moisture level are favourable. The flowers are harvested as soon as they have fully opened, but before they begin to wilt, approximately three months after planting. The harvest time is important, since the concentration of pyrethrins, which component can be considered the active tick-killing substance, is highest when the flowers have fully opened. After the harvest, the flowers are dried in order to reduce the moisture content and to extend the shelf life of the flowers. The drying is effected, for example, by laying the flowers in thin layers in the shade, resulting in a slow and uniform drying process without exposure to direct sunlight which has an adverse effect on pyrethrins. After the drying process has ended, the flowers are ground to obtain a granular solid material, for example pulverulent or fibrous material. The flowers treated in this way, which can therefore be considered a granular solid material, are subsequently mixed with natural cotton, wherein for example a mixing device can be used to ensure that the crushed flowers are uniformly distributed over the cotton. The amount of crushed flowers per gram of cotton lies in the range from 0.1-4 grams, preferably at least 0.5 grams and preferably at most 3 grams. Lastly, the cotton obtained in this way is placed in a housing produced from biodegradable cardboard, for example in an amount of approximately 3-4 grams of cotton per housing. The housing is subsequently placed on the ground in an environment where there are ticks. For example, mice can enter the housing and come into contact with the cotton containing the crushed flowers of Chrysanthemum cinerariifolium, and the mice also take the carrier material to their nest. It is often the prolonged contact with the carrier material in the nest of the mouse that ensures the tick is killed. Ticks which try to feed on the mouse, or which are already attached to the mouse, will die as a result of the contact with the crushed chrysanthemum. In this way, the life cycle of the tick is systemically interrupted.

The present invention is shown in a number of figures below, which figures serve merely for illustration.
Figure 1 shows a side view of a housing according to the present invention.
Figure 2 shows a front view of a housing according to the present invention.

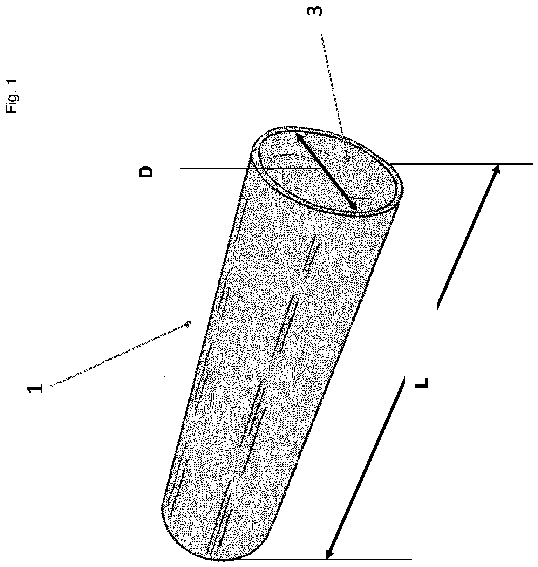

Figure 1 shows a side view of a housing 1 according to the present invention. The housing 1, provided with a cavity 3 extending over the length thereof, has a length L and a cross section D. The length L is at least 5 cm, preferably at least 10 and at most 25 cm, preferably at most 20 cm, and the cross section D is at least 2 cm, preferably at least 3 cm and at most 8 cm, preferably at most 5 cm.

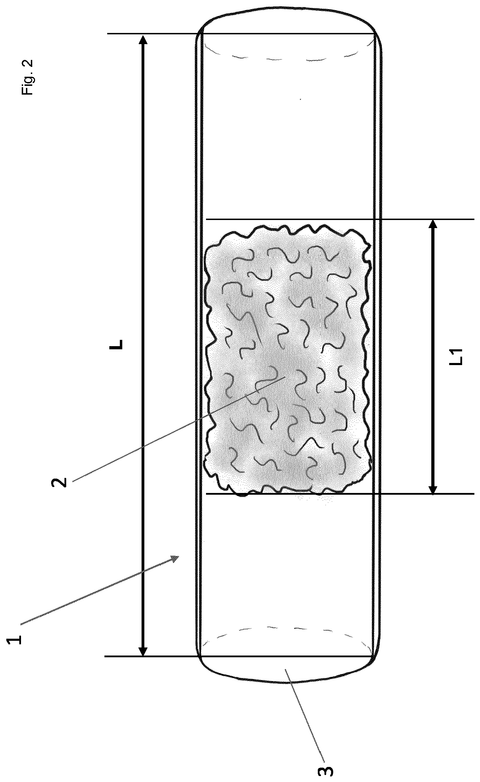

Figure 2 shows a front view of a housing 2 according to the present invention. A carrier material 2 is applied in a cavity 3 extending over the length thereof, in particular over a length L1. The length L1 is in a range from at least 0.2L and at most 0.5L. In the shown Figure 2, L2 has a length of 0.3L as an example.

## Claims

1. Housing (1) for being placed in a natural environment in order to kill ticks, wherein the housing comprises a cavity (3) extending over the length thereof, in which cavity of the housing there are one or more carrier materials (2), **characterized in that** the aforementioned one or more carrier materials comprise one or more natural insecticides, wherein a granular solid material obtained after crushing the flower buds of chrysanthemum (Chrysanthemum cinerariifolium) is used as natural insecticide.

2. Housing according to claim 1, **characterized in that** the amount of crushed flowers per gram of carrier material lies in the range from 0.1-4 grams, preferably at least 0.5 grams and preferably at most 3 grams.

3. Housing according to one or more of the preceding claims, **characterized in that** the housing is produced from a biodegradable material, selected from the group of cellulose-containing materials, such as paper, wood and cardboard, crops, such as maize and sugar cane, and biodegradable polymers, in particular polylactic acid (PLA), or a combination thereof.

4. Housing according to one or more of the preceding claims, **characterized in that** the one or more carrier materials are selected from the group of natural fibres comprising cotton, hemp, wool, silk, linen, sisal and jute, or a combination thereof.

5. Housing according to one or more of the preceding claims, **characterized in that** the one or more natural insecticides are uniformly distributed over the one or more carrier materials.

6. Housing according to one or more of the preceding claims, **characterized in that** the housing is provided with one or more openings, as a result of which a rodent, in particular a mouse, can move in and out of the housing.

7. Housing according to one or more of the preceding claims, **characterized in that** the housing is produced from cardboard, the carrier material is cotton, and wherein the granular solid material is mixed with the cotton located in the cavity of the housing.

8. Housing according to one or more of the preceding claims, **characterized in that** the housing has a length of at least 5 cm, preferably at least 10 and at most 25 cm, preferably at most 20 cm, and a cross section in the region of at least 2 cm, preferably at least 3 cm and at most 8 cm, preferably at most 5 cm.

9. Method for producing a housing (1) as described in one or more of claims 1-8, wherein the method comprises the following steps:
- providing a housing which comprises a cavity (3) extending over the length thereof,
- providing one or more natural insecticides,
- bringing one or more carrier materials (2) into contact with the one or more natural insecticides to obtain a filling material,
- applying the filling material in the cavity of the housing, **characterized in that** a granular solid material obtained after crushing the flower buds of chrysanthemum (Chrysanthemum cinerariifolium) is used as natural insecticide.

10. Use of a housing as described in one or more of claims 1-9 in a natural environment in order to kill ticks.

11. Use according to claim 10, wherein the natural environment is a garden, a park, a recreation area or a golf course.

## Patentansprüche

1. Gehäuse (1) zum Platzieren in einer natürlichen Umgebung, um Zecken zu töten, wobei das Gehäuse einen über seine Länge verlaufenden Hohlraum (3) umfasst, wobei in dem Hohlraum ein oder mehrere Trägermaterialien (2) angeordnet sind, **dadurch gekennzeichnet, dass** das oder die genannten Trägermaterialien ein oder mehrere natürliche Insektizide umfassen, wobei ein körniges festes Material, erhalten nach Zerkleinern der Blütenknospen von Chrysanthemum (Chrysanthemum cinerariifolium), als natürliches Insektizid verwendet wird.

2. Gehäuse nach Anspruch 1, **dadurch gekennzeichnet, dass** die Menge an zerkleinerten Blüten pro Gramm Trägermaterial in dem Bereich von 0,1-4 Gramm, vorzugsweise wenigstens 0,5 Gramm und vorzugsweise höchstens 3 Gramm, liegt.

3. Gehäuse nach einem oder mehreren der vorstehenden Ansprüche, **dadurch gekennzeichnet, dass** das Gehäuse aus einem biologisch abbaubaren Material ausgewählt aus der Gruppe von cellulosehaltigen Materialien, wie z.B. Papier, Holz und Karton, Kulturpflanzen, wie Mais und Zuckerrohr, und biologisch abbaubaren Polymeren, insbesondere Polymilchsäure (PLA), oder einer Kombination davon hergestellt ist.

4. Gehäuse nach einem oder mehreren der vorstehenden Ansprüche, **dadurch gekennzeichnet, dass** das eine oder die mehreren Trägermaterialien ausgewählt sind aus der Gruppe von Naturfasern umfassend Baumwolle, Hanf, Wolle, Seide, Leinen, Sisal und Jute, oder einer Kombination davon.

5. Gehäuse nach einem oder mehreren der vorstehenden Ansprüche, **dadurch gekennzeichnet, dass** das eine oder die mehreren natürlichen Insektizide gleichmäßig über das eine oder die mehreren Trägermaterialien verteilt sind.

6. Gehäuse nach einem oder mehreren der vorstehenden Ansprüche, **dadurch gekennzeichnet, dass** das Gehäuse mit einer oder mehreren Öffnungen versehen ist, wodurch sich ein Nagetier, insbesondere eine Maus, in das und aus dem Gehäuse bewegen kann.

7. Gehäuse nach einem oder mehreren der vorstehenden Ansprüche, **dadurch gekennzeichnet, dass** das Gehäuse aus Karton hergestellt ist, das Trägermaterial Baumwolle ist und wobei das körnige feste Material mit der in dem Hohlraum des Gehäuses angeordneten Baumwolle vermischt ist.

8. Gehäuse nach einem oder mehreren der vorstehenden Ansprüche, **dadurch gekennzeichnet, dass** das Gehäuse eine Länge von wenigstens 5 cm, vorzugsweise wenigstens 10 und höchstens 25 cm, vorzugsweise höchstens 20 cm, und einen Querschnitt in dem Bereich von wenigstens 2 cm, vorzugsweise wenigstens 3 cm und höchstens 8 cm, vorzugsweise höchstens 5 cm, aufweist.

9. Verfahren zur Herstellung eines Gehäuses (1) nach einem oder mehreren der Ansprüche 1-8, wobei das Verfahren die folgenden Schritte umfasst:
- Bereitstellen eines Gehäuses, das einen Hohlraum (3) umfasst, der über seine Länge verläuft,
- Bereitstellen eines oder mehrerer natürlicher Insektizide,
- Inkontaktbringen eines oder mehrerer Trägermaterialien (2) mit dem einen oder den mehreren natürlichen Insektiziden, um ein Füllmaterial zu erhalten;
- Einbringen des Füllmaterials in den Hohlraum des Gehäuses, **dadurch gekennzeichnet, dass** ein körniges festes Material, erhalten nach Zerkleinern der Blütenknospen von Chrysanthemum (Chrysanthemum cinerariifolium), als natürliches Insektizid verwendet wird.

10. Verwendung eines Gehäuses nach einem oder mehreren der Ansprüche 1-9 in einer natürlichen Umgebung zum Töten von Zecken.

11. Verwendung nach Anspruch 10, wobei die natürliche Umgebung ein Garten, ein Park, ein Erholungsgebiet oder ein Golfplatz ist.

## Revendications

1. Logement (1) destiné à être placé dans un environnement naturel afin de tuer les tiques, dans lequel le logement comprend une cavité (3) s'étendant sur toute sa longueur, dans laquelle se trouvent un ou plusieurs matériaux de support (2), **caractérisé en ce que** le ou les plusieurs matériaux de support susmentionnés comprennent un ou plusieurs insecticides naturels, dans lequel un matériau solide granulaire obtenu après écrasement des boutons floraux de chrysanthème (Chrysanthemum cinerariifolium) est utilisé comme insecticide naturel.

2. Logement selon la revendication 1, **caractérisé en ce que** la quantité de fleurs écrasées par gramme de matériau de support se situe dans la plage de 0,1 à 4 grammes, de préférence d'au moins 0,5 gramme et de préférence d'au plus 3 grammes.

3. Logement selon une ou plusieurs des revendications précédentes, **caractérisé en ce que** le logement est produit à partir d'un matériau biodégradable, choisi parmi le groupe des matériaux contenant de la cellulose, tels que le papier, le bois et le carton, des cultures, telles que le maïs et la canne à sucre, et des polymères biodégradables, en particulier l'acide polylactique (PLA), ou une combinaison de ceux-ci.

4. Logement selon une ou plusieurs des revendications précédentes, **caractérisé en ce que** le ou les plusieurs matériaux de support sont choisis parmi le groupe des fibres naturelles comprenant le coton, le chanvre, la laine, la soie, le lin, le sisal et le jute, ou une combinaison de ceux-ci.

5. Logement selon une ou plusieurs des revendications précédentes, **caractérisé en ce que** le ou les plusieurs insecticides naturels sont répartis uniformément sur le ou les plusieurs matériaux de support.

6. Logement selon une ou plusieurs des revendications précédentes, **caractérisé en ce que** le logement est pourvu d'une ou de plusieurs ouvertures, grâce auxquelles un rongeur, en particulier une souris, peut se déplacer dans et hors du logement.

7. Logement selon une ou plusieurs des revendications précédentes, **caractérisé en ce que** le logement est produit à partir de carton, le matériau de support est du coton, et dans lequel le matériau solide granulaire est mélangé au coton situé dans la cavité du logement.

8. Logement selon une ou plusieurs des revendications précédentes, **caractérisé en ce que** le logement a une longueur d'au moins 5 cm, de préférence d'au moins 10 et d'au plus 25 cm, de préférence d'au plus 20 cm, et une section transversale dans la région d'au moins 2 cm, de préférence d'au moins 3 cm et d'au plus 8 cm, de préférence d'au plus 5 cm.

9. Procédé de production d'un logement (1) tel que décrit dans une ou plusieurs des revendications 1 à 8, dans lequel le procédé comprend les étapes suivantes :
- la fourniture d'un logement qui comprend une cavité (3) s'étendant sur toute sa longueur,
- la fourniture d'un ou de plusieurs insecticides naturels,
- la mise en contact d'un ou de plusieurs matériaux de support (2) avec le ou les plusieurs insecticides naturels pour obtenir un matériau de remplissage,
- l'application du matériau de remplissage dans la cavité du logement,
**caractérisé en ce qu'**un matériau solide granulaire obtenu après écrasement des boutons floraux de chrysanthème (Chrysanthemum cinerariifolium) est utilisé comme insecticide naturel.

10. Utilisation d'un logement tel que décrit dans une ou plusieurs des revendications 1 à 9 dans un environnement naturel afin de tuer les tiques.

11. Utilisation selon la revendication 10, dans laquelle l'environnement naturel est un jardin, un parc, une aire de récréation ou un parcours de golf.
